# EUROPEAN PATENT SPECIFICATION

(11) **EP 1 015 923 B1**
(45) Date of publication and mention of the grant of the patent: **05.03.2008**
(21) Application number: 97943391.9
(22) Date of filing: 19.09.1997
(51) Int. Cl.: G02B 6/34, G02B 6/36, G02B 5/18

(54) **High efficiency ejection of light from optical wave guide, by holographically produced light scattering means**
Auskopplung von Licht aus einem optischen Wellenleiter mit hohem Wirkungsgrad durch Holographisch erzeugte Lichtstreumittel
Expulsion de lumiére à haut rendement à partir d'une guide d'ondes optiques au moyen d'organes de diffusion de lumiére produite par holographie

(43) Date of publication of application: 05.07.2000
(73) Proprietor: Teledyne Lighting and Display Products, Inc., Hawtorne, CA 90250 (US)
(72) Inventor: PELKA, David, G., Los Angeles, CA 90045 (US)
(74) Representative: TBK-Patent
(86) International application number: PCT/US1997/016680
(87) International publication number: WO 1999/015923

(56) References cited:
- EP-A- 0 584 545
- WO-A-95/04294
- WO-A-97/30373
- JP-A- 2 131 201
- US-A- 3 905 676
- US-A- 5 061 027
- US-A- 5 465 311
- US-A- 5 664 862
- US-A- 5 682 255

## Description

### BACKGROUND OF THE INVENTION

This invention concerns a radiant electromagnetic transmitting apparatus according to the preamble of Claim 1, and more particularly ejecting radiant electromagnetic energy by holographically produced light scattering means. Such energy is typically in the form of light.

There is need for apparatus capable of such energy ejection from optical wave guides, as from sites formed to produce controlled energy ejection.

A generic radiant electromagnetic energy transmitting apparatus is known from EP-A-0 584545 and comprises an elongated body consisting of electromagnetic energy transmitting material. The energy is injected into the body to travel therein and to be trapped during the travel by total internal reflecting off walls defined by the body. One site within the body has variegated surface relief acting to scatter incident radiant energy for ejection from the body as rays defining a selected solid angle. A source of the energy has an end portion received into the body to transmit the energy in different directions therein for effecting energy travel lengthwise of the body.

WO-A-9504294 discloses various lighting wave guides.

### SUMMARY OF THE INVENTION

It is an object of the present invention to further develop a radiant electromagnetic energy transmitting apparatus having the features of the preamble of claim 1 such that a controlled energy ejection is achieved.

According to the invention, this object is achieved by a radiant electromagnetic energy transmitting apparatus having the features of claim 1.

Advantageous further developments are set out in the dependent claims.

Typically, such energy, in the form of light, is generated via laser, light emitting diodes (LEDs), or other radiation sources such as incandescent, florescent or metal halide lamps. The radiation is ejected into an optical wave guide in such a way that the radiation is trapped in the wave guide by Total Internal Reflection. A variegated surface relief light scattering sites ejects the radiation from their wave guided TIR modes into a certain preferred solid angle.

As will be seen, the body may consist of light transmitting synthetic material, as in the form of a rod along which and within which the light travels. The scattering sites are typically formed holographically using source and reference beams that impinge upon one another with interference effects. Thus, the scattering sites may be generated holographically by interfering a reference beam with an object beam in a holographic emulsion. The object beam typically comprises a converging input beam of the same angular shape as the desired output beam. The object beam is formed via lens, mirrors, or computer generated holograms. Once the recording is made in the photographic emulsion it is transferred to nickel master plates, which then are used in impression, injection or ultra-violet curing replication techniques as by formation of a replica on a tape that is then applied to a wave guide.

The resulting variegated surface-relief pattern has a specific geometry and architecture. For example, to create the scattering centers for a cylindrical wave guide (a fiber optic wave guide), one would record the original interference pattern by using a laser beam injected into the end of the cylindrical wave guide and by introducing an object beam into the wave guide through its cylindrical side, the two beams interfering at an emulsion layer adjacent a side of the wave guide. Correspondingly, for a planar wave guide such as a thin plastic sheet, the reference laser beam is injected through the edge of the wave guide, while the object beam is incident through the large surface of the top of the wave guide.

Playback is produced when the laser beam reference is replace by another light source with a similar wavelength. When LEDs are placed at the end of the cylinder or rod, they become the reference beam. Now the entire system plays back in the opposite direction, i.e. light is emitted from the generated site or sites into the same solid angle as in the object, but as a diverging wavefront.

The source of such energy has an end portion received into said body to transmit energy (such as light) in different directions therein for effecting energy travel lengthwise of the body. The body typically defines a recess and the energy source (such as an LED) end portions received into the recess, formed at an edge portion of the body. Multiple such recesses may be employed, and may be spaced apart, as will be seen. LEDs may be embedded in the body or rod, as will appear.

The object and advantages of the invention, as well as the details of an illustrative embodiment, will be more fully understood from the following specification and drawings, in which:

### DRAWING DESCRIPTION

Fig. 1 is an elevation showing a comparative example "playback" of radiant energy impingement on a site, to re-produce the desired optical readout;
Fig. 2 is an elevation taken in section on lines 2-2 of Fig. 1;
Fig. 3 is an enlarged section taken in elevation through one end of a light transmitting rod, showing LED embedding;
Fig. 4 is an elevation taken in section on lines 4-4 of Fig. 3;
Fig. 5 is an enlarged perspective view showing an LED of the type used in Figs. 1-4;
Fig. 6 is a view like Fig. 1, but showing an embodiment with light sources embedded in reduced cross sectional zones along a light transmitting rod;
Fig. 7 is an enlarged section taken on lines 7-7 of Fig. 6;
Fig. 8 is a perspective view showing site generation for a planar optical wave guide not claimed, and
Fig. 9 is a perspective view showing site generation for a rod shaped optical wave guide;
Fig.. 10 is an elevation showing a radiant energy transmitting device incorporating a diffuser; and
Fig. 11 shows a modification of the Fig, 10 device.

### DETAILED DESCRIPTION

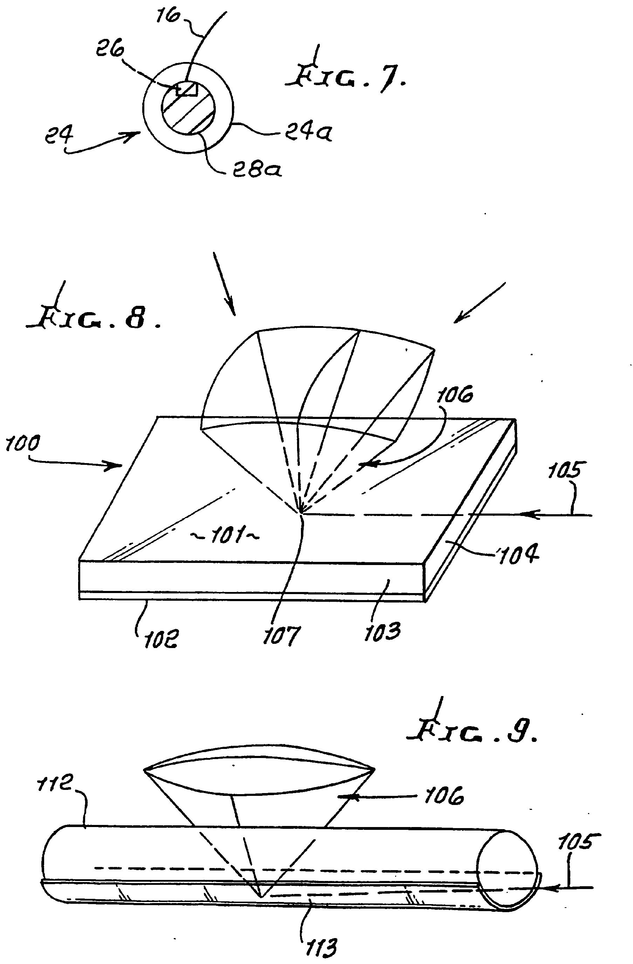

Referring first to Fig. 8, an optical wave guide not claimed is in the form of a plate 100 having upper and lower sides 101 and 102, and edges 103 and 104. A thin photographic emulsion 113 covers the plate lower side 102, and may have film shape. The wave guide may consist of synthetic resinous material, and is transparent. A reference light beam 105 is injected edgewise into the plate to travel leftwardly in the plate with Total Internal Reflection off the plate sides 101 and 102.

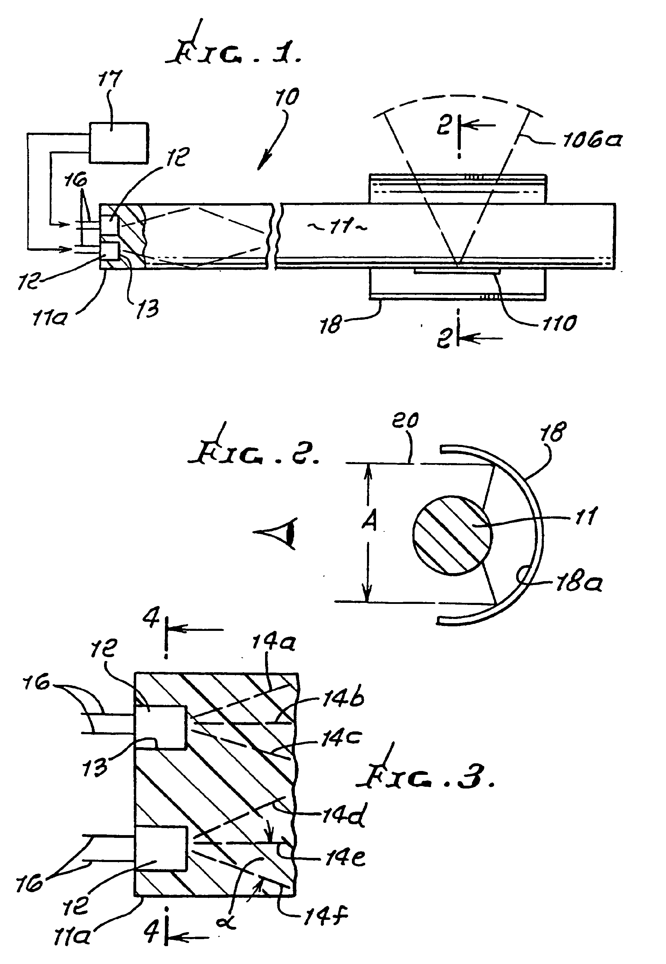

An object light beam provides an input convergent wavefront 106 entering the top side 101 of the plate and impinges on the reference beam at a site location 107 at the lower side 102 of the plate. The object beam may be formed via lenses or a computer generated hologram, as is known. The two beams interfere at the site location 107 as on emulsion, producing a variegated surface pattern in the developed emulsion corresponding to the object. The pattern in the emulsion is then transferred to a nickel wafer plate. That plate can then be used, as via impression, injection or ultra-violet curing reflection techniques, to re-produce the pattern on a carrier such as a tape seen at 110 in Fig. 1. The tape is applied to the wave guide such as rod 11.

The pattern on the tape constitutes a scattering center or site useful for re-producing the original object beam 106a ejected from the wave guide.

Fig. 9 shows the same principles of site generation, as applied to a wave guide in the form of a rod 112. The photographic emulsion film appears as layer 113.

Regarding typical wave guides not claimed, refer to Figs. 1-4, radiant energy transmitting apparatus being indicated generally at 10, such energy for example consisting of light, as in the visible wave length zone of the spectrum. The apparatus includes an elongated wave guide such as a rod 11 consisting of electromagnetic energy transmitting material, and a source or sources of such energy, each having an end portion recessed into the rod to transmit energy in a preferred direction, for effecting energy travel lengthwise of (i.e. along) the rod. See for example the LEDs 12 received in recesses 13 in the end portion 11a of the rod, so that the LEDs are effectively embedded in the rod end portion. Light from the LEDs is shown being transmitted in a different directions 14-a-14f, over a range of angles, these showings being illustrative only. A large portion of such light is typically (i.e. within cone of the angle α) transmitted as rays extending at angles such as to enable successive total internal reflections off the boundary or periphery of the rod, along its length, for travel lengthwise along and internally of the rod. As shown, the LEDs may be completely embedded, along their lengths in the rod end portion, and may have tight wall-to-wall fits in the recesses 13. LED terminals appear at 16, and a low voltage source 17 is schematically shown or connected with such terminals, in Fig. 1. The rod typically consists of synthetic polymeric material, and may be flexible so as to be bendable. The rod may be considered as a "wave guide", i.e. to guide the light waves for transmission lengthwise of the rod. Usable synthetic polymer include polymers of silicone, urethane, epoxy, polyamide, acrylic, polyesters and others. Glasses are usable. These are transparent.

Figs. 1 and 2 also show a reflector 18 located at one side of the rod. Light emanating from the rod is reflected, as for example as shown by rays 20 reflected from the interior curved surface 18a of the reflector. The reflector may take the form of discreet light scattering dots, with varying spacing to provide uniformity of collimated light reflection as viewed from the aperture A.

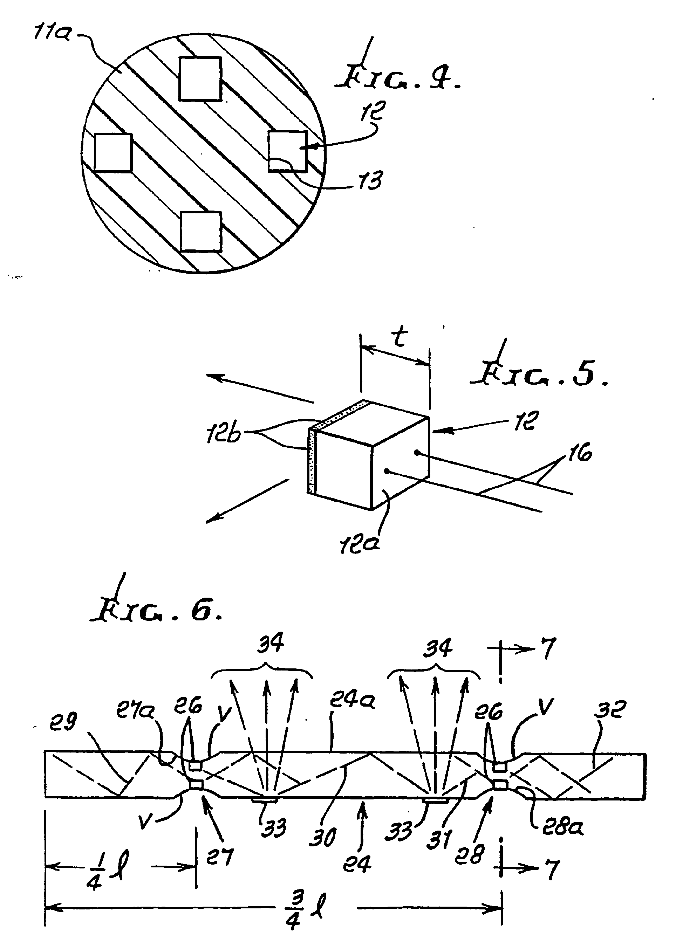

Fig. 5 shows one form of LED 12 having a cube shape, with terminals 16 projecting from the end wall 12a. Light generated by the LED emanates from different walls such as all five remaining walls 12b. Recesses 13 in the rod may have cube shape for embedding such LEDs, with tight fits. A typical cube dimension t is 0.01 inch.

In Figs. 6 and 7 showing the claimed embodiment, LEDs 26 are received in recesses along the rod, inwardly of rod outer surface 24a. See recess locations 27 and 28, and rod "venturi" surfaces 26, with tapering at 27a and 28a. See LED produced rays 29-32. Maximum light transmission is effected if locations 27 and 28 are ¼ l and ¾ l, where l is rod length.

Site locations to eject light "object" rays 34, as described, appear at 33.

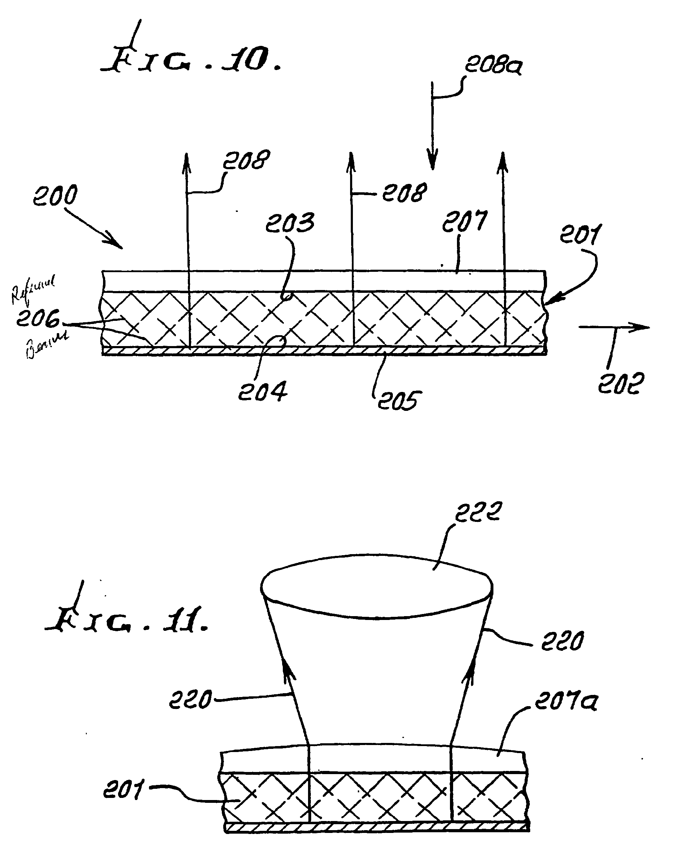

Fig. 10 shows a modification 200 wherein a light-transmitting body 201 is elongated in the direction 202 and consists of light transmitting synthetic material formed to transmit light by total internal reflection off walls 203 and 204 of the body. Such light may be considered as a reference TIR beam 206 or beams. A. photographic emulsion 205 layer extends adjacent wall 204 and functions as previously described as at 115 in Fig. 8.

A holographic diffuser layer or plate 207, or film, extends adjacent body wall 203 and acts to transmit light emanating from the emulsion 205 in collimated rays, as indicated at 208. This occurs because of the interaction of the reference beam with the sites defined by the emulsion. Those sites were generated when collimated light, as indicated by rays 208a passed into the body via the diffuser and interacted with the reference beam at the emulsion, creating the sites. The diffuser 207 may be of the type sold by Kaiser Optical, or by Physical Optics Corp., California.

Fig. 9 shows a modification like Fig. 10 excepting that the diffuser 207a, in combination with the body 201 and the emulsion, operates to pass emanating light divergently, as indicated by rays 220 and 221, as for example to define an object 222. The sites were generated by rays from a similar object passing back through the diffuser into the body to the emulsion to interact with the reference TIR beam or beams.

## Claims

1. Radiant electromagnetic energy transmitting apparatus, comprising in combination:
a) an elongated body (24) consisting of electromagnetic energy transmitting material, said energy injected into the body (24) to travel therein and to be trapped during said travel by total internal reflection off walls (24a) that are defined by the body (24),
b) and there being at least one site (33) within the body (24) having variegated surface relief acting to scatter incident radiant energy for ejection from the body (24) as rays defining a selected solid angle,
c) and including a source of said energy having an end portion (11a) received into said body (24) to transmit said energy in different directions therein for effecting energy travel lengthwise of the body (24),
**characterized in that**
said body (24) is in the form of a rod (24) that defines multiple recesses (27, 28) spaced apart along the rod (24), and said source of said energy includes multiple sources (26) received into said recesses (27, 28).

2. The apparatus of claim 1, wherein the rod (24) is narrowed proximate to said recess (27, 28) location.

3. The apparatus of claim 1, wherein the rod (24) has a length "1" and said recesses (27, 28) are located at or proximate to ¼ * l and ¾ * l, along the rod (24) length.

4. The apparatus of claim 1, wherein the rod (24) has opposite side wall extents (27a, 28a) which are relatively convergent at said recess (27, 28) locations.

5. The apparatus of claim 1, wherein said site (33) is initially formed on a photographic emulsion.

6. The apparatus of claim 1, wherein said body (24) comprises light transmitting material.

7. The apparatus of claim 6, wherein said material comprises synthetic resin.

8. The apparatus of claim 1, wherein said energy source is a light source, said end portion (11a) of which is smaller than the overall cross-dimension of the rod (24) proximate said source end portion (11a).

9. The apparatus of claim 1, wherein said energy source includes an LED (12) embedded into the rod (24).

10. The apparatus of claim 1, wherein said energy source comprises multiple LEDs (12) embedded into the rod (24).

11. The apparatus of claim 1, wherein there are multiple of said sites (33) in the body (24).

12. The apparatus of claim 1, further comprising a light diffuser (207) extending adjacent said body (24) for passing light emanating from the body (24).

13. The apparatus of claim 12, wherein the diffuser (207) includes a holographic diffuser for transmitting collimated light.

14. The apparatus of claim 12, wherein the diffuser (207) is a holographic diffuser for transmitting light divergently, away from said body (24).

## Patentansprüche

1. Vorrichtung zur Übertragung elektromagnetischer Strahlungsenergie, die in Kombination aufweist:
a) einen gestreckten Körper (24) aus einem Material, das elektromagnetische Energie überträgt, wobei die Energie in den Körper (24) injiziert wird, um darin transportiert zu werden und während des Transports durch interne Totalreflektion an den Wänden (24a), die durch den Körper (24) definiert werden, eingefangen zu sein,
b) und wobei es zumindest einen Ort (33) im Körper (24) mit geschecktem Oberflächenrelief gibt, das wirksam ist, einfallende Strahlungsenergie zum Ausstoßen aus dem Körper (24) als Strahlen zu streuen, die einen gewählten Raumwinkel definieren,
c) und wobei eine Quelle der Energie enthalten ist, die ein Endstück (11a) hat, das im Körper (24) aufgenommen ist, um die Energie in verschiedenen Richtungen darin zu übertragen, um einen Energietransport in Längsrichtung des Körpers (24) zu bewirken,
**dadurch gekennzeichnet, dass**
der Körper (24) die Form eines Stabes (24) hat, der mehrere Aussparungen (27, 28) definiert, die mit Zwischenräumen entlang des Stabs (24) angeordnet sind, und die Quelle der Energie mehrere Quellen (26) enthält, die in den Aussparungen (27, 28) aufgenommen werden.

2. Vorrichtung nach Anspruch 1, bei der der Stab (24) in der Nähe des Ortes einer Aussparung (27, 28) verjüngt ist.

3. Vorrichtung nach Anspruch 1, bei der der Stab (24) eine Länge "1" hat und sich die Aussparungen (27, 28) bei oder ungefähr bei ¼ * l und ¾ * l entlang der Länge des Stabes (24) befinden.

4. Vorrichtung nach Anspruch 1, bei der der Stab (24) gegenüberliegende Seitenwandumfänge (27a, 28a) hat, die relativ konvergent an den Orten einer Aussparung (27, 28) sind.

5. Vorrichtung nach Anspruch 1, bei der der Ort (33) anfangs auf einer photographischen Emulsion gebildet wird.

6. Vorrichtung nach Anspruch 1, bei der der Körper (24) aus lichtübertragendem Material besteht.

7. Vorrichtung nach Anspruch 6, bei der das Material aus synthetischem Harz besteht.

8. Vorrichtung nach Anspruch 1, bei der die Energiequelle eine Lichtquelle ist, deren Endstück (11a) kleiner ist als die äußere Querausdehnung des Stabes (24) in der Nähe des Quellenendstücks (11a).

9. Vorrichtung nach Anspruch 1, bei der die Energiequelle eine in den Stab (24) eingebettete LED (12) enthält.

10. Vorrichtung nach Anspruch 1, bei der die Energiequelle mehrere in den Stab (24) eingebettete LEDs (12) enthält.

11. Vorrichtung nach Anspruch 1, bei der es mehrere der Orte (33) im Körper (24) gibt.

12. Vorrichtung nach Anspruch 1, ferner mit einem sich an den Körper (24) angrenzend erstreckenden Lichtdiffusor (207), um aus dem Körper (24) ausstrahlendes Licht hindurchzuführen.

13. Vorrichtung nach Anspruch 12, bei der der Diffusor (207) einen holographischen Diffusor für ein Übertragen von kollimiertem Licht enthält.

14. Vorrichtung nach Anspruch 12, bei der der Diffusor (207) ein holographischer Diffusor zum divergenten Übertragen von Licht weg von dem Körper (24) ist.

## Revendications

1. Appareil de transmission d'énergie électromagnétique rayonnante, comprenant en combinaison:
a) un corps allongé (24) consistant en un matériau de transmission d'énergie électromagnétique, ladite énergie éjectée dans le corps (24) pour se déplacer dans celui-ci et pour être piégée pendant ledit déplacement par une réflexion interne totale sur des parois (24a) qui sont définies par le corps (24),
b) et il y a au moins un site (33) qui se situe dans le corps (24) ayant un relief de surface bigarrée agissant pour diffuser une énergie rayonnante incidente pour éjection depuis le corps (24) comme des rayons définissant un angle solide sélectionné,
(c) et incluant une source de ladite énergie ayant une portion d'extrémité (11a) reçue dans ledit corps (24) pour y transmettre ladite énergie dans des directions différentes afin d'effectuer un déplacement d'énergie dans le sens de la longueur du corps (24),
**caractérisé en ce que**
ledit corps (24) est sous forme d'une tige (24) qui définit plusieurs évidements (27, 28) écartés le long de la tige (24), et ladite source de ladite énergie inclut plusieurs sources (26) reçues dans lesdits évidements (27, 28).

2. Appareil de la revendication 1, dans lequel la tige (24) est rétrécie à proximité dudit emplacement d'évidements (27, 28).

3. Appareil de la revendication 1, dans lequel la tige (24) a une longueur "1" et lesdits évidements (27, 28) sont situés à ou proche de ^{1/4} * l et ^{3/4} * l, le long de la longueur de la tige (24).

4. Appareil de la revendication 1, dans lequel la tige (24) a des étendues de parois latérales opposées (27a, 28a) qui sont relativement convergentes auxdits emplacements d'évidements (27, 28).

5. Appareil de la revendication 1, dans lequel ledit site (33) est initialement formé sur une émulsion photographique.

6. Appareil de la revendication 1, dans lequel ledit corps (24) comprend un matériau transmettant de la lumière.

7. Appareil de la revendication 6, dans lequel ledit matériau comprend une résine synthétique.

8. Appareil de la revendication 1, dans lequel ladite source d'énergie est une source lumineuse, dont ladite portion d'extrémité (11a) est plus petite que la dimension transversale globale de la tige (24) à proximité de ladite portion d'extrémité de source (11a).

9. Appareil de la revendication 1, dans lequel ladite source d'énergie inclut une diode électroluminescente (12) intégrée dans la tige (24).

10. Appareil de la revendication 1, dans lequel ladite source d'énergie comprend plusieurs diodes électroluminescentes (12) intégrées dans la tige (24).

11. Appareil de la revendication 1, dans lequel il existe une pluralité desdits sites (33) dans le corps (24).

12. Appareil de la revendication 1, comprenant en plus un diffuseur de lumière (207) s'étendant de manière adjacente audit corps (24) pour faire passer de la lumière émanant du corps (24).

13. Appareil de la revendication 12, dans lequel le diffuseur (207) inclut un diffuseur holographique pour transmettre de la lumière collimatée.

14. Appareil de la revendication 12, dans lequel le diffuseur (207) est un diffuseur holographique pour transmettre de la lumière de façon divergente, loin dudit corps (24).
